# EUROPEAN PATENT APPLICATION

(11) **EP 4 650 903 A1**
(43) Date of publication of application: **19.11.2025**
(21) Application number: 25175377.8
(22) Date of filing: 09.05.2025
(51) Int. Cl.: G05D 1/606, G05D 1/646, B63H 25/00, G05D 105/50, G05D 107/00, G05D 109/30, G05D 111/50

(54) **SHIP MANEUVERING SYSTEM, CONTROL METHOD FOR SHIP MANEUVERING SYSTEM, AND MARINE VESSEL**

(30) Priority: 16.05.2024 JP 2024080329
(71) Applicant: Yamaha Hatsudoki Kabushiki Kaisha, Iwata-shi, Shizuoka 438-8501 (JP)
(72) Inventor: Tagata, Akihiro, Iwata-shi, Shizuoka, 4388501 (JP)
(74) Representative: Grünecker Patent- und Rechtsanwälte PartG mbB

(57) **Abstract**

A ship maneuvering system includes a plurality of inertial measurement units, and a controller configured or programmed to estimate a property of a wave received by a marine vessel based on a behavior of a hull of the marine vessel measured by the plurality of inertial measurement units, and perform a heading holding control with considering an influence of the wave of which the property is estimated.

## Description

The present invention relates to a ship maneuvering system including a plurality of inertial measurement units, a control method for the ship maneuvering system, and a marine vessel.

When an occupant on a marine vessel acts fishing, a heading holding control to hold a bow heading to a target heading may be performed. A ship maneuvering system of the marine vessel that performs such a heading holding control usually includes one inertial measurement unit (hereinafter referred to as an "IMU"). The IMU detects a heading (hereinafter referred to as an "actual heading") in which the bow of the marine vessel is actually oriented (for example, see Japanese Patent Laid-Open Publication No. JP 2023-60045 A). Then, a feedback control is performed to set a target steering angle based on difference between the target heading to which the bow should be directed and the actual heading.

When waves are present on a sea surface, the marine vessel in which the heading holding control is performed may travel over a wave. At this time, a yaw rate may be generated in a hull of the marine vessel due to the wave. Since the yaw rate due to the wave is added to a yaw rate caused by the target steering angle determined in the feedback control, a heading change amount of the marine vessel to be steered is different from a heading change amount to the target heading, and the heading may not be appropriately held. That is, there is still a room for improvement in the heading holding control of the marine vessel.

Example embodiments of the present invention provide a ship maneuvering system, a control method for the ship maneuvering system, and a marine vessel, which are capable of holding an appropriate heading in the heading holding control.

According to an example embodiment of the present invention, a ship maneuvering system includes a plurality of inertial measurement units, and a controller configured or programmed to estimate a property of a wave received by a marine vessel based on a behavior of a hull of the marine vessel measured by the plurality of inertial measurement units, and perform a heading holding control with considering an influence of the wave of which the property is estimated.

According to another example embodiment of the present invention, a control method for a ship maneuvering system including a plurality of inertial measurement units includes estimating a property of a wave received by a marine vessel based on a behavior of a hull of the marine vessel measured by the plurality of inertial measurement units, and performing a heading holding control with considering an influence of the wave of which the property is estimated.

According to another example embodiment of the present invention, a marine vessel includes a hull, and a ship maneuvering system including a plurality of inertial measurement units, and a controller configured or programmed to estimate a property of a wave received by a marine vessel based on a behavior of a hull of the marine vessel measured by the plurality of inertial measurement units, and perform a heading holding control with considering an influence of the wave of which the property is estimated.

According to the above examples, an appropriate heading can be held in the heading holding control.

The above and other elements, features, steps, characteristics and advantages of the present invention will become more apparent from the following detailed description of the example embodiments with reference to the attached drawings.

### BRIEF DESCRIPTION OF THE DRAWINGS

FIG. 1 is a plan view schematically illustrating a marine vessel according to an example embodiment of the present invention.
FIG. 2 is a block diagram schematically illustrating a configuration of a ship maneuvering system mounted on the marine vessel in FIG. 1.
FIG. 3 is a graph showing fluctuations of roll angles of a hull measured by an IMU at a port side and an IMU at a stern when the marine vessel receives waves from a front of a starboard side.
FIG. 4 is a graph showing fluctuations of yaw rates of the hull measured by the IMU at the port side and the IMU at the stern when the marine vessel receives waves from the front of the starboard side.
FIGS. 5A and 5B are views illustrating maneuvering modes supporting a heading holding control.
FIG. 6 is a block diagram illustrating the heading holding control of a comparative example different from the example embodiment.
FIGS. 7A and 7B are views illustrating the yaw rates generated by waves.
FIGS. 8A, 8B, and 8C are views illustrating changes in the direction of the yaw rate when the marine vessel travels over a wave and influences thereof.
FIG. 9 is a block diagram illustrating the heading holding control considering the yaw rate caused by a wave.
FIG. 10 is a block diagram illustrating the heading holding control in which an absolute value of a target steering angle is limited.

### DETAILED DESCRIPTION OF THE EXAMPLE EMBODIMENTS

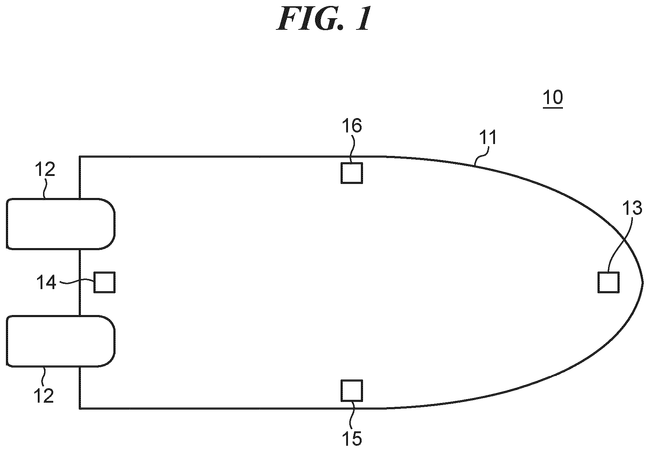

Hereinafter, example embodiments of the present invention will be described with reference to the drawings. FIG. 1 is a plan view schematically illustrating a marine vessel 10 according to an example embodiment of the present invention. In FIG. 1, the marine vessel 10 includes a hull 11 and at least one, for example, two outboard motors 12 as propulsion devices attached to a stern of the hull 11 via brackets (not shown). Each outboard motor 12 is able to turn substantially horizontally with respect to the hull 11 of the marine vessel 10 with the bracket as a fulcrum. When the outboard motor 12 turns and an acting direction of a thrust generated by the outboard motor 12 is inclined with respect to a center line in a front-back direction of the hull 11, a yaw moment to turn the hull 11 is generated, and thus, the marine vessel 10 changes a course (steers).

In an example embodiment, an angle formed between the acting direction of the thrust of the outboard motor 12 and the center line in the front-back direction of the hull 11 is referred to as a "steering angle". The propulsion device included in the marine vessel 10 is not limited to the outboard motor 12, and may be, for example, an inboard motor or an inboard/outboard motor. A power source of a propulsion device may be any of an internal combustion engine, an electric motor, and a hybrid of an internal combustion engine and an electric motor.

Further, four IMUs (Inertial Measurement Units) 13 to 16 are arranged in the hull 11. Specifically, the IMU 13 is arranged at a bow, the IMU 14 is arranged at the stern, the IMU 15 is arranged at a starboard side, and the IMU 16 is arranged at a port side. However, the IMUs do not need to be arranged at all of the bow, stern, starboard side, and port side, and the IMUs may be arranged at at least two positions among the bow, stern, starboard side, and port side.

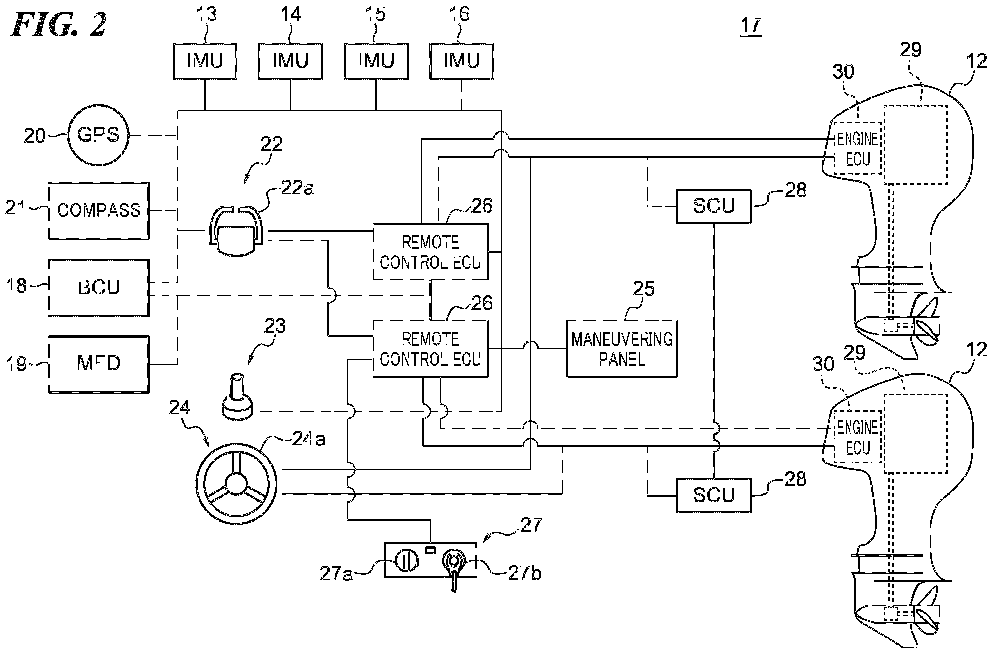

FIG. 2 is a block diagram schematically illustrating a configuration of a ship maneuvering system mounted on the marine vessel 10 in FIG. 1. As shown in FIG. 2, the ship maneuvering system 17 includes the outboard motors 12, the IMUs 13 to 16, a BCU (Boat Control Unit) 18, an MFD (a Multi-Function Display) 19, a GPS 20, a compass 21, a remote control unit 22, a joystick 23, a steering mechanism 24, a maneuvering panel 25, remote control ECUs 26, a key switch unit 27, and SCUs (Steering Control Units) 28. The components of the ship maneuvering system 17 are communicably connected to each other.

The GPS 20 detects a current position and a vessel speed of the marine vessel 10 and transmits the current position and the vessel speed of the marine vessel 10 to the BCU 18. Each of the IMUs 13 to 16 measures behaviors of the marine vessel 10, such as pitch, yaw, and roll of the hull 11 at the arranged position, and transmits the measurement results to the BCU 18. The compass 21 detects an actual heading of the marine vessel 10 and transmits the actual heading of the marine vessel 10 to the BCU 18.

The remote control unit 22 has levers 22a corresponding to the respective outboard motors 12, and a vessel operator switches the acting directions of the propulsion forces generated by the corresponding outboard motors 12 between the front and rear by operating the levers 22a, and adjusts the vessel speed by adjusting the magnitudes of the outputs of the corresponding outboard motors 12. At this time, the remote control unit 22 transmits signals to control the outboard motors 12 to the BCU 18 and the remote control ECUs 26 in response to the operations of the levers 22a.

The joystick 23 is a control stick to maneuver the marine vessel 10, and transmits a signal to move the marine vessel 10 in a tilting direction to the BCU 18 and the remote control ECUs 26. The steering mechanism 24 is a device for the vessel operator to determine the course of the marine vessel 10. When the vessel operator operates a steering wheel 24a of the steering mechanism 24 to the left or right, the outboard motors 12 turn and generate yaw moments, and the course of the marine vessel 10 can be changed.

The key switch unit 27 includes a main switch 27a and an engine shutoff switch 27b. The main switch 27a is a manual operator to collectively start and collectively stop engines 29 that are power sources of the outboard motors 12. And the engine shutoff switch 27b is a switch to urgently stop the engines of the outboard motors 12.

The MFD 19 is, for example, a color LCD display, and functions as a display unit to display various kinds of information and also functions as a touch panel to accept an input from the vessel operator. The maneuvering panel 25 has switches (not shown) corresponding to various maneuvering modes, and the vessel operator shifts a mode of the marine vessel 10 to a desired maneuvering mode by operating the corresponding switch. The SCUs 28 are provided corresponding to the respective outboard motors 12, and change the acting directions of the thrusts of the outboard motors 12 by controlling steering units (not shown) that turn the corresponding outboard motors 12 substantially horizontally.

The BCU 18 detects a state of the marine vessel 10 based on the signals transmitted from the respective components of the ship maneuvering system 17, determines the magnitudes and acting directions of the thrusts to be generated by the outboard motors 12, and transmits the determined magnitudes and directions to the remote control ECUs 26. The remote control ECUs 26 are provided for the respective outboard motors 12, and transmit signals controlling the engines 29 and the steering units of the respective outboard motors 12 to engine ECUs 30 and the SCUs 28 of the respective outboard motors 12 in response to the signals transmitted from the BCU 18, the steering mechanism 24, the remote control unit 22, or the joystick 23, thereby adjusting the magnitudes and acting directions of the thrusts of the outboard motors 12.

For example, when the marine vessel 10 receives waves obliquely from the front, the waves (particularly, wave crests) reach the respective portions of the hull 11 at different timings, and thus the respective portions of the hull 11 are differently affected by the waves at the same time. Also, the hull 11 is not a perfect rigid body. Therefore, when the marine vessel 10 receives waves obliquely from the front, the portions of the hull 11 may exhibit different behaviors at the same time. In the example embodiment, since the four IMUs 13 to 16 are arranged at the different positions of the hull 11, the pitches, yaws, and rolls of the hull 11 at the same time measured by the IMUs 13 to 16 may be different.

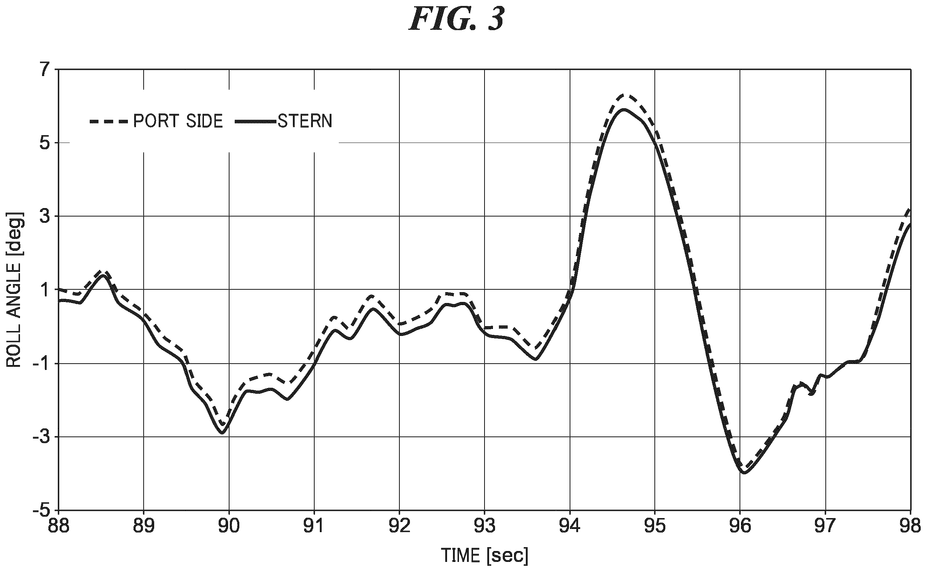

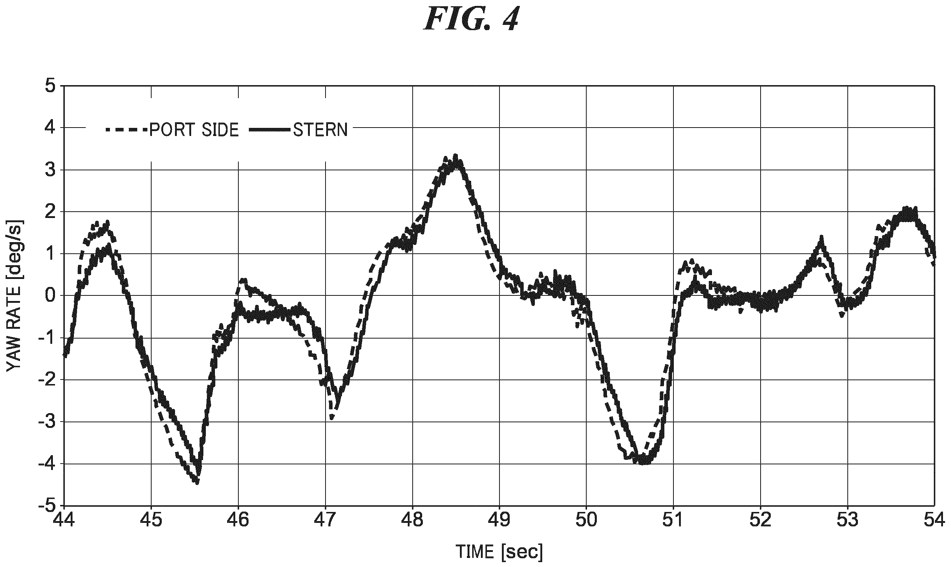

FIG. 3 is a graph showing fluctuations of roll angles of the hull 11 measured by the IMU 16 at the port side and the IMU 14 at the stern when the marine vessel 10 receives waves from the front of the starboard side. FIG. 4 is a graph showing fluctuations of yaw rates of the hull 11 measured by the IMU 16 at the port side and the IMU 14 at the stern when the marine vessel 10 receives waves from the front of the starboard side.

In the case shown in FIG. 3, the phase difference between the roll angle at the port side and the roll angle of stern is small, but an angular deviation occurs between the roll angle of the stern and the roll angle of the port side. It is considered that a certain point is distorted and a relatively large roll angle is generated when the certain point of the hull 11 runs on the wave crest. That is, it is considered that the wave crest reaches the certain point at the time when the relatively large roll angle is generated. Therefore, the difference in time at which the wave crest arrives at the stern and port side can be grasped from the difference in time at which the relatively large roll angles occur. And the traveling direction and speed of the wave can be estimated in consideration of the difference in time at which the wave crest arrives at the stern and port side and the positional relationship between the IMU 16 at the port side and the IMU 14 at the stern.

In the case shown in FIG. 4, both the phase difference and angular deviation between the yaw rate at the stern and the yaw rate at the port side occur, and the yaw rate at the port side is generated earlier than the yaw rate at the stern. It is considered that the wave reaches a certain position in the hull 11 at the time when the yaw rate is generated at the certain point. Therefore, in the case shown in FIG. 4, since it is considered that the wave first reaches the port side and then reaches the stern, the traveling direction and speed of the wave can be estimated from the difference between the time when the wave reaches the port side and the time when the wave reaches the stern and the positional relationship between the IMU 16 at the port side and the IMU 14 at the stern.

A wave height can also be estimated from a change amount in the pitch measured by the IMU 16 at the port side or the IMU 14 at the stern. For example, the change amount in the height direction of the marine vessel 10, that is, the wave height can be estimated from an integral value of the change amounts in the pitch and the vessel speed. Alternatively, the relationship between the wave height and the change amount in the pitch in the marine vessel 10 may be obtained in advance, and the wave height may be estimated from a measured change amount in the pitch based on the relationship. Furthermore, a wavelength of the waves can be estimated from pitch periods measured by the IMU 16 at the port side or the IMU 14 at the stern.

That is, properties of the wave, such as the traveling direction, the wave speed, the wave height, and the wavelength, of the wave received by the marine vessel 10 can be estimated using the measurement results of the IMU 16 at the port side and the IMU 14 of the stern. The present invention is based on these findings, and in the example embodiment of the present invention, the properties of the wave received by the marine vessel 10 are estimated based on the measurement results from the IMUs 13 to 16.

In the above example, the measurement results of the IMU 16 at the port side and the IMU 14 at the stern are used. In order to improve the accuracy of estimation of the properties of the wave received by the marine vessel 10, it is preferable that the difference in the roll angle, the yaw rate, or the pitch is large. The difference in the measured roll angle, yaw rate, or pitch increases as the distance between the two IMUs increases. Therefore, in order to improve the accuracy of the properties of the wave received by the marine vessel 10, it is preferable to use the measurement results of the IMU 13 at the bow and the IMU 14 at the stern.

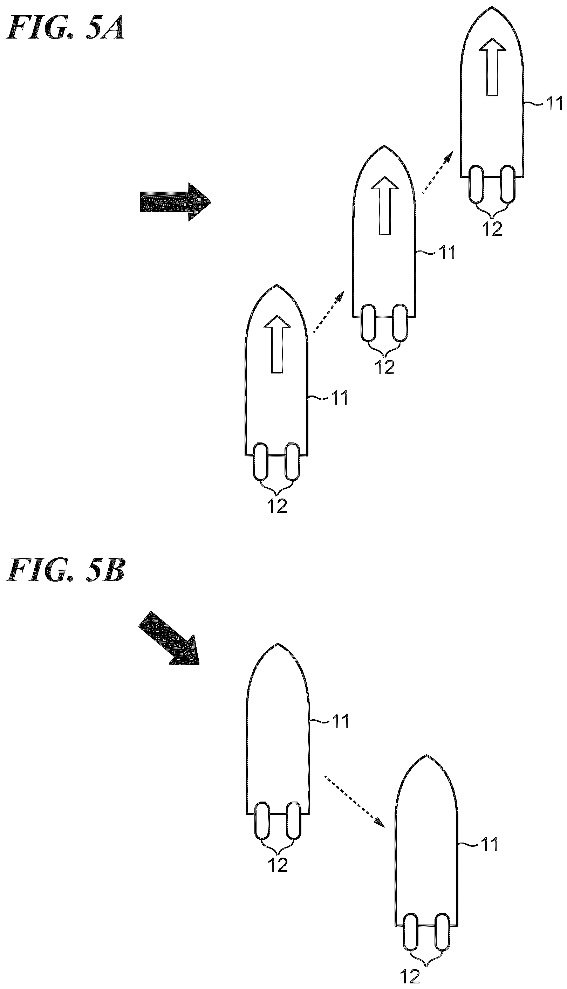

When an occupant acts fishing, the ship maneuvering system 17 of the marine vessel 10 performs a heading holding control. In a maneuvering mode supporting the heading holding control, the heading (a bow direction) of the marine vessel 10 is held in a specific direction. FIGS. 5A and 5B are views illustrating maneuvering modes supporting the heading holding control.

For example, in the maneuvering mode shown in FIG. 5A, when a thrust in the forward direction (white arrows in the drawing) acts on the hull 11, the heading (bow direction) of the marine vessel 10 is held in a specific direction (upward in FIG. 5A). When this maneuvering mode is set, the BCU 18 controls the magnitudes and directions of the thrusts of the outboard motors 12 so that the bow direction is held in a specific direction even if wind or water flow (black arrows in FIG. 5A) acts on the marine vessel 10 and the marine vessel 10 is flew in a downstream direction of the wind or the water flow. That is, in this maneuvering mode, even when the wind or the water flow acts on the marine vessel 10, the marine vessel 10 continues to travel while the bow direction is held in the specific direction.

In the maneuvering mode shown in FIG. 5B, when the thrust in the forward direction or the backward direction is not applied to the hull 11, the bow direction is held in a specific direction (upward in FIG. 5B). Even when this maneuvering mode is set, the BCU 18 controls the magnitudes and directions of the thrusts of the outboard motors 12 so that the bow direction is held in a specific direction even if wind or water flow (black arrows in FIG. 5B) acts on the marine vessel 10 and the marine vessel 10 is flew in a downstream direction of the wind or the water flow. That is, in this maneuvering mode, the marine vessel 10 is flew in the downstream direction of the wind or the water flow while the bow direction is held in the specific direction. In this maneuvering mode, the thrusts generated by the outboard motors 12 are minimum thrusts to generate yaw moments acting on the hull 11, and is not thrusts to actively move the marine vessel 10 to a certain point.

When the ship maneuvering system 17 performs the heading holding control, the BCU 18 sets a steering angle (hereinafter, referred to as a "target steering angle") to generate a yaw moment to hold the bow direction in the specific direction.

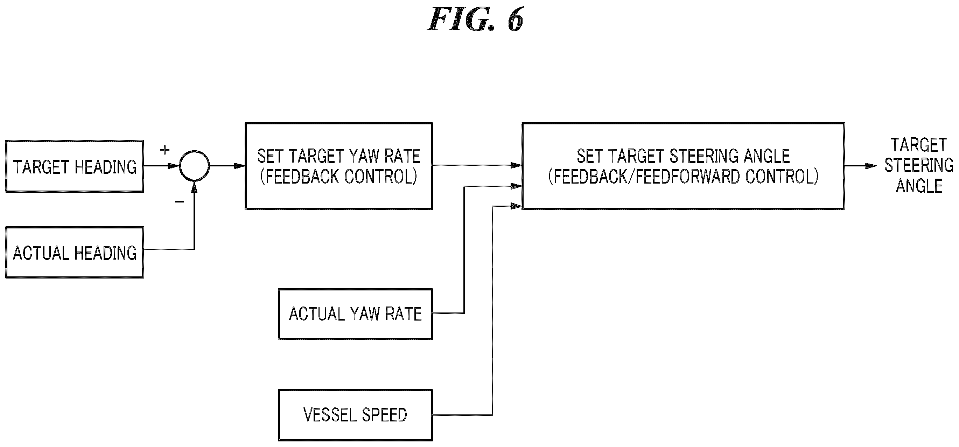

FIG. 6 is a block diagram illustrating the heading holding control of a comparative example different from the example embodiment. As shown in FIG. 6, first, a target yaw rate to reduce a heading deviation amount, which is a difference between a target heading and an actual heading, to 0 is set by a feedback control. The target heading is the bow direction to be held that is set by a vessel operator with the MFD 19. The actual heading is detected by the compass 21. Then, a target steering angle to achieve the target yaw rate is set from the target yaw rate, an actual yaw rate of the hull 11 measured by the IMU 13, and the vessel speed detected by the GPS 20 by a feedback control and a feedforward control.

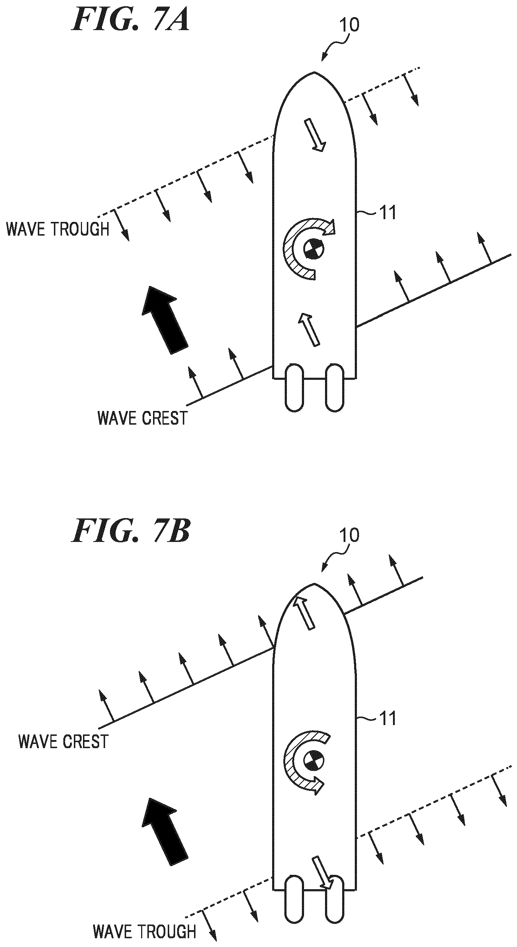

When the marine vessel 10 receives a wave, a yaw rate may be generated by the wave. FIGS. 7A and 7B are views illustrating the yaw rates generated by waves. Usually, a rotational motion of water in a vertical direction occurs in a wave, and the water moves in a traveling (propagation) direction of the wave (indicated by a thick black arrow in FIGS. 7A and 7B) in a wave crest, and the water moves in a direction opposite to the traveling direction of the wave in a wave trough.

Therefore, when the marine vessel 10 receives a following sea from obliquely behind the starboard side and when a vicinity of the bow is positioned in the wave trough and a vicinity of the stern is positioned in the wave crest as shown in FIG. 7A, the bow receives a water flow from obliquely front left and receives a force to push back the hull 11 (shown by a white arrow in FIG. 7A), and the stern receives a water flow from obliquely rear right and receives a force to push the hull 11 (shown by a white arrow in FIG. 7A). As a result, a clockwise moment in a plan view (indicated by a hatched arrow in FIG. 7A) acts on the hull 11, and a yaw rate that causes the marine vessel 10 to turn toward the starboard side is generated in the marine vessel 10.

When the marine vessel 10 receives a following sea from obliquely behind the starboard side and when the vicinity of the bow is positioned in the wave crest and the vicinity of the stern is positioned in the wave trough as shown in FIG. 7B, the bow receives a water flow from obliquely behind right and receives a force to push the hull 11 (shown by a white arrow in FIG. 7B), and the stern receives a water flow from obliquely ahead left and receives a force to push back the hull 11 (shown by a white arrow in FIG. 7B). As a result, a counterclockwise moment in a plan view (indicated by a hatched arrow in FIG. 7B) acts on the hull 11, and a yaw rate that causes the marine vessel 10 to turn toward the port side is generated in the marine vessel 10.

Further, when the marine vessel 10 receives a head sea, the stern of the marine vessel 10 receives the water flow flowing into a water surface cut by the bow. When the marine vessel 10 travels obliquely with respect to the head sea, the bow and the stern receive the water flows from the mutually opposite directions, and the yaw rate to turn the marine vessel 10 is generated.

Since the yaw rate caused by such waves is added to the yaw rate generated by the target steering angle set in the heading holding control in FIG. 6, the direction of the bow of the marine vessel 10 steered in accordance with the target steering angle may exceed the target heading or may not reach the target heading.

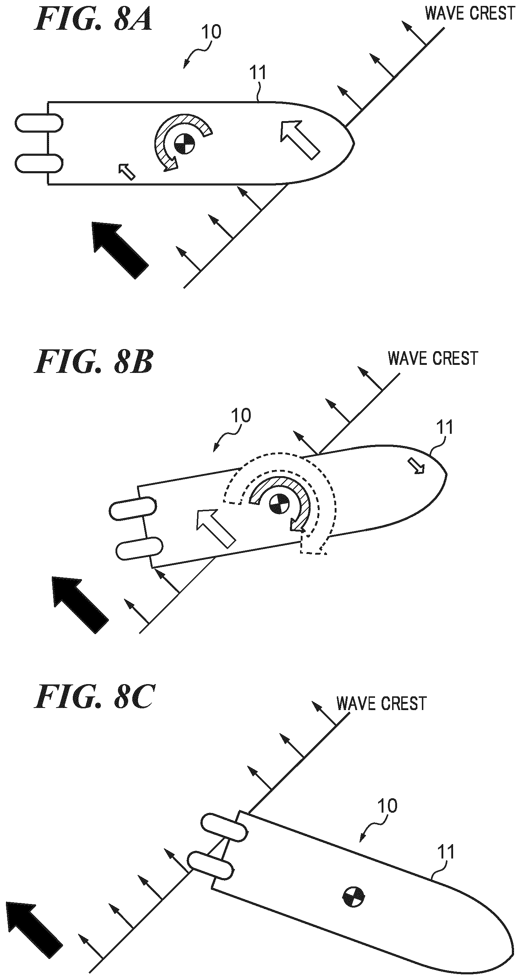

When the marine vessel 10 travels over a wave, the direction of the yaw rate generated by the wave may be changed. FIGS. 8A, 8B, and 8C are views illustrating changes in the direction of the yaw rate when the marine vessel 10 travels over a wave and influences thereof.

For example, in a state where the marine vessel 10 is obliquely receiving a head sea from the front of the starboard side, when the bow runs on a wave crest as shown in FIG. 8A, the bow receives a water flow from the obliquely right front and receives a force to push back the hull 11 (shown by a white arrow in FIG. 8A) because the water moves in the traveling direction (shown by a thick black arrow in FIG. 8A) of the wave in the wave crest.

At this time, the stern is positioned on a slope of the wave. Since the water does not move greatly (fast) on the slope of the wave, although the stern also receives the water flow from the obliquely front right, the force to push back the stern of the hull 11 received from the obliquely front right is smaller than the force to push back the bow. As a result, a counterclockwise moment in a plan view (indicated by a hatched arrow in FIG. 8A) acts on the hull 11, and a yaw rate that causes the marine vessel 10 to turn toward the port side is generated in the marine vessel 10. That is, the bow direction is deviated to the port side from the target heading. At this time, the heading holding control in FIG. 6 sets a target steering angle to generate a clockwise yaw moment in the plan view so as to return the bow direction to the starboard side.

Thereafter, when the wave moves in the traveling direction and when the wave crest approaches the stern and the bow is positioned on the slope of the wave as shown in FIG. 8B, the stern receives a water flow from the obliquely front right and receives a force to push back the hull 11 (shown by a white arrow in FIG. 8B). Since the water does not move greatly on the slope of the wave as described above, although the bow also receives the water flow from the obliquely front right, the force to push back the bow of the hull 11 received from the obliquely front right is smaller than the force to push back the stern.

Then, a clockwise moment in the plan view (indicated by a hatched arrow in FIG. 8B) acts on the hull 11. At this time, the clockwise moment in the plan view (indicated by a broken line arrow in FIG. 8B) caused by the target steering angle set in the heading holding control in FIG. 6 acts on the hull 11, and as a result, the yaw rate caused by the wave is added on the yaw rate generated by the target steering angle set in the heading holding control in FIG. 6. As a result, a yaw rate higher than the yaw rate required to return the bow direction to the target heading is generated in the hull 11, and the bow direction of the marine vessel 10 to be steered exceeds the target heading (FIG. 8C).

That is, as described with reference to the examples in FIGS. 7A and 7B and FIGS. 8A, 8B, and 8C, when the yaw rate caused by the wave is generated in performing the heading holding control in FIG. 6, this yaw rate is added to the yaw rate generated by the target steering angle set in the heading holding control in FIG. 6, and thus the heading may not be appropriately held. In considering such an issue, the example embodiment takes an influence of a wave into consideration when the ship maneuvering system 17 performs the heading holding control.

However, depending on a property of a wave received by the marine vessel 10, a yaw rate caused by the wave is very small, and an influence thereof may be ignored. Therefore, in the example embodiment, it is determined whether the marine vessel 10 is receiving a wave, and when it is determined that the marine vessel 10 is receiving a wave, the content of the heading holding control is changed according to the property of the wave received by the marine vessel 10.

For example, when a wavelength of a received wave is shorter than a hull length of the marine vessel 10, the situation where the vicinity of the stern is positioned in the wave crest when the vicinity of the bow is positioned in the wave trough shown in FIG. 7A and the situation where the vicinity of the stern is positioned at wave trough when the vicinity of the bow is positioned in the wave crest shown in FIG. 7B do not occur, and a plurality of wave crests or wave troughs exist along a hull length direction of the hull 11. In this case, the forces (the force pushing back the hull 11 and the force pushing the hull 11) received by the hull 11 from the water flows in the wave crests and wave troughs are mutually canceled, and the yaw rate generated due to the waves becomes very small. Therefore, when the wavelength of the received wave is shorter than the hull length of the marine vessel, the heading holding control in FIG. 6 is performed without considering the yaw rate caused by the wave.

Even when the wavelength of the received wave is equal to or longer than the hull length of the marine vessel 10, if an inclination angle of the wave determined by the wave length and wave height of the wave is less than 2 degrees, the hull 11 receives very small force from the water flows in the wave crest and wave trough, and thus the yaw rate caused by the wave is also very small. Therefore, even when the wave length of the received wave is equal to or longer than the hull length of the marine vessel 10, if the inclination angle of the wave determined by the wavelength and wave height of the wave is less than 2 degrees, the heading holding control of FIG. 6 is performed without considering the yaw rate caused by the wave.

On the other hand, when the wavelength of the received wave is equal to or longer than the hull length of the marine vessel 10 and the inclination angle of the wave determined by the wavelength and wave height of the wave is equal to or more than 2 degrees, the hull 11 receives a large force from the water flow in the wave crest or wave trough, and generates a yaw rate that should not be ignored.

The waves of which a property is estimated based on the measurement results of IMUs 13 to 16 are considered to be the waves received by the marine vessel 10.

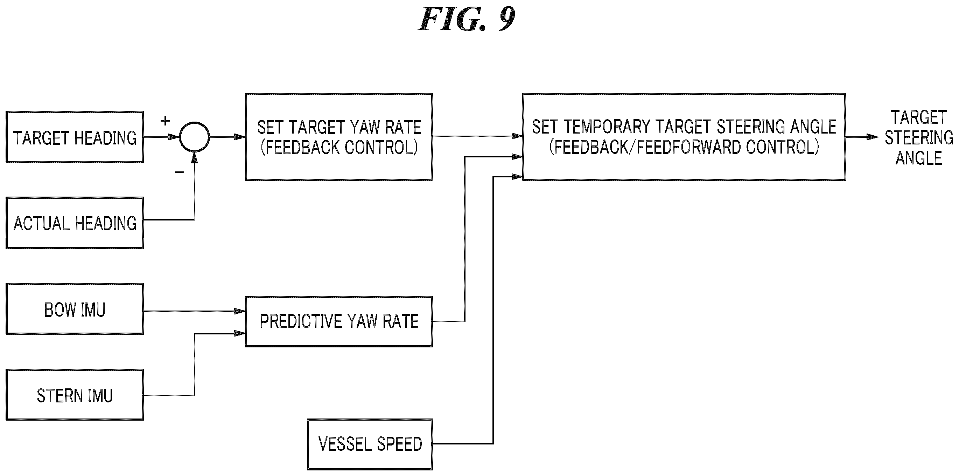

FIG. 9 is a block diagram illustrating the heading holding control considering a yaw rate caused by a wave. As shown in FIG. 9, first, a target yaw rate is set based on a target heading and an actual heading by a feedback control.

Next, for example, a yaw rate generated in the hull 11 due to a wave of which a property is estimated based on the measurement results of the IMU 13 at the bow and the IMU 14 at the stern is predicted. The measurement results used when estimating the property of the wave received by the marine vessel 10 are not limited to the measurement results of the IMU 13 at the bow and the IMU 14 at the stern, and it is enough to use at least two of the measurement results from the IMUs 13 to 16.

Then, a target steering angle for achieving the target yaw rate is set from the target yaw rate, the predicted value of the yaw rate generated in the hull 11 due to the wave (shown as a "predicted yaw rate value" in FIG. 9), and the vessel speed detected by the GPS 20 by the feedback control and feedforward control, At this time, the target steering angle is set so that the target yaw rate is achieved when the predicted yaw rate value is added to the yaw rate generated by the target steering angle. Specifically, a steering angle obtained by subtracting a steering angle corresponding to the predicted yaw rate value from a steering angle required to achieve the target yaw rate is set as the target steering angle.

According to the example embodiment, when the target steering angle is determined based on the difference between the target heading and the actual heading in the heading holding control, the target steering angle is determined after subtracting the steering angle corresponding to the predicted value of the yaw rate generated in the hull 11 due to the wave. Thus, even when the yaw rate caused by the wave is added to the yaw rate caused by the target steering angle, the bow direction of the steered marine vessel 10 can be prevented from exceeding the target heading, and the proper heading can be held.

In the example embodiment, the four IMUs 13 to 16 are arranged in the hull 11 of the marine vessel 10. Accordingly, even when the measurement result of any IMU includes an error, an influence of drift, or noise, the measurement result is averaged with the measurement results of the other IMUs, and thus it is possible to eliminate the error, the influence of drift, or noise. As a result, the property of the wave received by the marine vessel 10 can be accurately estimated. Furthermore, if any of the IMUs failed, the property of the wave received by the marine vessel 10 can be estimated using the measurement results of the other IMUs, which enables to continue the heading holding control with considering the yaw rate caused by the wave.

Although the preferred example embodiment of the present invention has been described above, the present invention is not limited to the above-described example embodiment, and various modifications and changes can be made within the scope of the gist of the present invention.

For example, when the wavelength of the wave received by the marine vessel 10 is equal to or longer than the hull length of the marine vessel 10 and the inclination angle of the wave determined by the wavelength and wave height of the wave is equal to or more than 2 degrees, the ship maneuvering system 17 predicts the yaw rate generated in the hull 11 due to the wave, subtracts the steering angle corresponding to the predicted yaw rate, and then sets the target steering angle, as shown in the heading holding control in FIG. 9.

However, in an actual environment, the wave height changes irregularly. Further, the marine vessel 10 may receive a swell and a wind wave from different directions. That is, since the property of the wave changes irregularly, it is difficult to accurately predict the force that the marine vessel 10 receives from the wave. In addition, the yaw rate generated due to the actual wave of which the property changes irregularly may be larger than the yaw rate generated due to the wave of which the property is estimated. Therefore, even if the yaw rate caused by the actual wave of which the property changes irregularly is added, excess turning of the marine vessel 10 may be prevented by decreasing the yaw rate caused by the steering angle by setting an upper limit value of an absolute value of the steering angle in accordance with the estimated property of the wave.

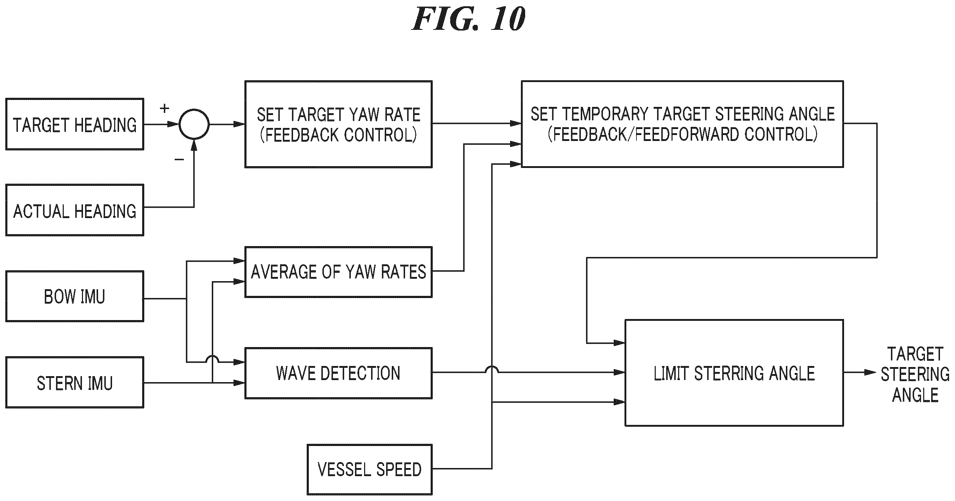

FIG. 10 is a block diagram illustrating the heading holding control in which the absolute value of the target steering angle is limited.

As shown in FIG. 10, first, a target yaw rate is set from the target heading and the actual heading by the feedback control. Further, for example, a direction of the wave of which the property is estimated based on the measurement results of the IMU 13 at the bow and the IMU 14 at the stern is detected, and an average of the yaw rate measured by the IMU 13 at the bow and the yaw rate measured by the IMU 14 at the stern is calculated. Note that the direction of the wave received by the marine vessel 10 may be detected using not only the measurement results of the IMU 13 of the bow and the IMU 14 of the stern but also at least two of the measurement results from the IMUs 13 to 16, and the average of the yaw rates may be calculated.

Then, a temporary target steering angle for achieving the target yaw rate is set from the target yaw rate, the average of the yaw rates, and the vessel speed detected by the GPS 20 by the feedback control and feedforward control.

Thereafter, it is determined whether the absolute value of the target steering angle should be limited based on the vessel speed and the wave height and wavelength of the wave received by the marine vessel 10. Specifically, when the wavelength of the received wave is equal to or longer than the hull length of the marine vessel 10 and the inclination angle of the wave determined by the wavelength and the wave height of the wave is equal to or more than 2 degrees, it is determined whether the absolute value of the set temporary target steering angle is equal to or more than 10 degrees, for example. When the absolute value of the temporary target steering angle is less than 10 degrees, the temporary target steering angle is set as the target steering angle as-is. On the other hand, when the absolute values of the temporary target steering angle is equal to or more than 10 degrees, the target steering angle is set so that the absolute value becomes 10 degrees.

Further, when the wavelength of the received wave is shorter than the hull length of the marine vessel 10 or when the inclination angle of the wave determined by the wavelength and wave height of the wave is less than 2 degrees even if the wavelength of the received wave is equal to or longer than the hull length of the marine vessel 10, the temporary target steering angle is set as the target steering angle as-is.

Although the upper limit of the absolute value of the steering angle is uniformly set to 10 degrees in the above described example, the upper limit of the absolute value of the steering angles may be changed in accordance with the inclination angle of the wave. For example, when the inclination angle is large and the yaw rate caused by the actual wave becomes larger, the upper limit of the absolute value of the steering angle may be less than 10 degrees. Further, instead of setting the upper limit of the absolute value of the steering angle to a value less than 10 degrees, the target yaw rate may be limited (an upper limit may be set to the target yaw rate).

Further, the heading holding control in FIG. 9 and the heading holding control in FIG. 10 may be combined. The combined heading holding control is performed when the marine vessel 10 is receiving a wave, the wavelength of the wave is equal to or longer than the hull length of the marine vessel 10, and the inclination angle of the wave determined by the wavelength and wave height of the wave is equal to or more than 2 degrees.

In this combined heading holding control, first, a target yaw rate is set from a target heading and an actual heading by a feedback control, a property of a wave received by the marine vessel 10 is estimated based on the measurement results of the IMU 13 at the bow and the IMU 14 at the stern, and a yaw rate generated in the hull 11 due to the wave of which the property is estimated is predicted.

Then, a steering angle for achieving the target yaw rate is set as a temporary target steering angle based on the target yaw rate, the predicted yaw rate, and the ship speed detected by the GPS 20 by the feedback control and feedforward control. The temporary target steering angle corresponds to a steering angle obtained by subtracting a steering angle corresponding to the predicted yaw rate from a steering angle required to achieve the target yaw rate.

Thereafter, it is determined whether the absolute value of the target steering angle should be limited based on the vessel speed and the wavelength and wave height of the wave received by the marine vessel 10. Specifically, when the wavelength of the received wave is equal to or longer than the hull length of the marine vessel10 and the inclination angle of the wave determined by the wavelength and wave height of the wave is equal to or more than 2 degrees, the temporary target steering angle is set as the target steering angle as-is if the absolute value of the set temporary target steering angle is less than 10 degrees. On the other hand, if the absolute value of the temporary target steering angle is equal to or more than 10 degrees, the target steering angle is set so that the absolute values become 10 degrees.

Further, when the wavelength of the received wave is shorter than the hull length of the marine vessel 10, or when the inclination angle of the wave determined by the wavelength and wave height of the wave is less than 2 degrees even if the wavelength of the received wave is equal to or longer than the hull length of the marine vessel 10, the temporary target steering angle is set as the target steering angle as-is.

In the example embodiment, the property of the wave received by the marine vessel 10 is estimated based on the measurement results from the IMUs 13 to 16. On the other hand, a camera or a LIDAR may be mounted on the marine vessel 10, and the property of the wave received by the marine vessel 10 may be estimated using an image of a sea surface captured by the camera or the form of the sea surface measured by the LIDAR in addition to the measurement results from the IMUs 13 to 16. This can improve the accuracy of the estimated wave property.

While example embodiments of the present invention have been described above, it is to be understood that variations and modifications will be apparent to those skilled in the art without departing from the scope of the present invention. The scope of the present invention, therefore, is to be determined solely by the following claims.

## Claims

1. A ship maneuvering system comprising:
a plurality of inertial measurement units (13-16); and
a controller (18) configured or programmed to:
estimate a property of a wave received by a marine vessel (10) based on a behavior of a hull (11) of the marine vessel (10) measured by the plurality of inertial measurement units (13-16); and
perform a heading holding control with considering an influence of the wave of which the property is estimated.

2. The ship maneuvering system according to claim 1, wherein the plurality of inertial measurement units (13-16) are disposed at at least two positions among a bow, a stern, a starboard side, and a port side of the hull (11).

3. The ship maneuvering system according to claim 1 or 2, wherein the controller (18) is configured or programmed to estimate the property of the wave received by the marine vessel (10) based on a deviation between yaw rates of the hull of the marine vessel (10) measured by the plurality of inertial measurement units (13-16).

4. The ship maneuvering system according to claim 1 or 2, wherein the controller (18) is configured or programmed to estimate the property of the wave received by the marine vessel (10) based on a deviation between roll angles of the hull of the marine vessel (10) measured by the plurality of inertial measurement units (13-16).

5. The ship maneuvering system according to claim 1 or 2, wherein the controller (18) is configured or programmed to estimate the property of the wave received by the marine vessel (10) based on a change amount of a pitch of the hull (11) of the marine vessel (10) measured by at least one of the plurality of inertial measurement units (13-16).

6. The ship maneuvering system according to any of claims 1 to 5, wherein the controller (18) is configured or programmed to change a content of the heading holding control in accordance with the property of the wave in a case where it is determined that the marine vessel (10) is receiving the wave based on the behavior of the hull (11) of the marine vessel (10) measured by the plurality of inertial measurement units (13-16).

7. The ship maneuvering system according to claim 6, wherein the controller (18) is configured or programmed to consider a yaw rate that is generated in the hull (11) of the marine vessel (10) and is caused by the wave when a steering angle of the marine vessel (10) is set in the heading holding control of which the content is changed.

8. The ship maneuvering system according to claim 6 or 7, wherein the controller (18) is configured or programmed to set an upper limit value of an absolute value of a steering angle of the marine vessel (10) in accordance with the property of the wave when the steering angle of the marine vessel (10) is set in the heading holding control of which the content is changed.

9. The ship maneuvering system according to any of claims 6 to 8, wherein the controller (18) is configured or programmed to consider the influence of the wave in the heading holding control in a case where a wavelength of the wave of which the property is estimated is equal to or longer than a hull (11) length of the marine vessel (10).

10. The ship maneuvering system according to claim 9, wherein the controller (18) is configured or programmed not to consider the influence of the wave in a case where an inclination angle of the wave determined by the wavelength and wave height is less than 2 degrees even if the wavelength of the wave of which the property is estimated is equal to or longer than the hull (11) length of the marine vessel (10).

11. A control method for a ship maneuvering system (17) including a plurality of inertial measurement units (13-16), the control method comprising:
estimating a property of a wave received by a marine vessel (10) based on a behavior of a hull (11) of the marine vessel (10) measured by the plurality of inertial measurement units (13-16); and
performing a heading holding control with considering an influence of the wave of which the property is estimated.

12. The control method for the ship maneuvering system (17) according to claim 11, further comprising:
changing a content of the heading holding control in accordance with the property of the wave in a case where it is determined that the marine vessel (10) is receiving the wave based on the behavior of the hull (11) of the marine vessel (10) measured by the plurality of inertial measurement units (13-16).

13. A marine vessel comprising:
a hull (11); and
a ship maneuvering system (17) comprising:
a plurality of inertial measurement units (13-16); and
a controller (18) configured or programmed to:
estimate a property of a wave received by a marine vessel (10) based on a behavior of a hull (11) of the marine vessel (10) measured by the plurality of inertial measurement units (13-16); and
perform a heading holding control with considering an influence of the wave of which the property is estimated.

14. The marine vessel according to claim 13, wherein the controller (18) is configured or programmed to change a content of the heading holding control in accordance with the property of the wave in a case where it is determined that the marine vessel (10) is receiving the wave based on the behavior of the hull (11) of the marine vessel (10) measured by the plurality of inertial measurement units (13-16).
